# EUROPEAN PATENT APPLICATION

(11) **EP 4 750 030 A1**
(43) Date of publication of application: **27.05.2026**
(21) Application number: 24214405.3
(22) Date of filing: 21.11.2024
(51) Int. Cl.: H04L 67/00, H04W 4/80, H04W 12/77, H04L 67/104

(54) **PEER-TO-PEER COMMUNICATION**

(71) Applicant: Ascahi GmbH, 80469 München (DE)
(72) Inventor: Pröpster, Günter, 80469 München (DE); Chikkala, Samuel Paul, 60488 Frankfurt am Main (DE)
(74) Representative: Grünecker Patent- und Rechtsanwälte PartG mbB

(57) **Abstract**

The invention provides a method for establishing a peer-to-peer connection, comprising: scanning a tag by a mobile client device; notifying a server that the tag has been scanned by the client device, wherein an association of the tag with a mobile host device is prestored on the server; sending a notification message by the server to the host device, the notification message informing the host device that the client device is requesting to establish a connection by having scanned the tag; and triggered by an input on the host device or automatically in response to having received the notification message, establishing a unidirectional connection between the host device and the client device, allowing the host device to receive data from the client device.

## Description

### Field of the Invention

The invention relates to a method for establishing a peer-to-peer connection.

### Prior Art

Peer-to-Peer (P2P) communication enables users to communicate directly with each other. Messages and media files may be exchanged between the users. The users of mobile devices can directly interact and both sided are aware of the connection.

However, for some applications, a user of a device receiving a request for a communication link from another user at another device may want to have further information on the other user at the other device before granting a full connection between the two devices.

This is a disadvantage of presently available peer-to-peer communication methods.

### Description of the Invention

It is the object of the present invention to overcome or alleviate at least some of the above-mentioned disadvantages.

The invention is set out in the appended claims.

The invention is defined in independent claim 1 that relates to a method for establishing a peer-to-peer connection, comprising: scanning a tag by a mobile client device; notifying a server that the tag has been scanned by the client device, wherein an association of the tag with a mobile host device is pre-stored on the server; sending a notification message by the server to the host device, the notification message informing the host device that the client device is requesting to establish a connection by having scanned the tag; and triggered by an input on the host device or automatically in response to having received the notification message, establishing a unidirectional connection between the host device and the client device, allowing the host device to receive data from the client device.

By first establishing only a unidirectional connection so that the host may obtain further information on the client by receiving data from the client, the host remains anonymous to the client. However, due to privacy requirements of personal data, in general the client may have to agree in advance to provide the data to the host or host device.

In a development of the method according to the invention, the data may be received by the host device without notification of the client device. In that case, the client may not know about establishment of the unidirectional connection.

According to another development, by scanning the tag, an operator of the client device may agree to one or more types of data being send to the host device.

In another development, the method may further comprise: accepting, by another input on the host device or automatically, the request of the client device to establish the connection; and establishing a bidirectional connection allowing mutual exchange of data between the host device and the client device.

According to a further development, the steps of accepting the request of the client device and establishing a bidirectional connection are performed after the step of establishing a unidirectional connection.

In another development, the unidirectional connection is terminated if there is no further input on the host device within a predefined period of time, and optionally, the client device receives a message that the host device is not available.

According to a further development, the data may comprise at least one of text data, image data, video data, or sound data; and/or wherein the data comprise at least one of position data of the client device or an identification of an operator of the client device.

This can be further developed in that the data may comprise real-time data generated by a camera and/or a microphone of the client device. If the bidirectional connection has been established, the data may comprise real-time data generated by a camera and/or a microphone of the host device.

According to another development, the data received from the client device comprises image or video data, and an algorithm or an artificial intelligence method is used to perform face recognition to verify the identity, mood or intention of the operator of the client device. The algorithm or artificial intelligence method may be implemented on the host device or on the server.

In another development, scanning of the tag allows a successful connection only within a preselected time span or for a limited number of connection requests and/or the tag may be void (or expired) after the preselected time span or the limited number of connection requests and does no longer allow a connection.

According to a further development, the tag is a delivery tag placed on a delivery item or on an accompanying document of the delivery item, and the method may comprise sending delivery information to the host device based on an input on the client device or automatically, such delivery information may for example be a message consisting of text, a picture of placement of the delivery item, and/or position information of the delivery item.

According to another development, more than one client device may request a communication at the same time and respective communication links may be distributed among multiple available host devices.

In a further development, the operator of the host device can trigger a door opener, in particular by sending a unique electronic key to the client device.

According to another development, the tag may comprise a QR-code, a barcode, an RF-ID or an NFC tag.

The invention also provides a computer-readable medium comprising instructions which, when executed by a computer, cause the computer to carry out the method of the invention or the method of one of the above described developments.

Further features and exemplary embodiments as well as advantages of the present invention will be explained in greater detail hereinafter with reference to the drawings. It is understood that the specific embodiments do not limit the present invention.

### Brief Description of the Drawing

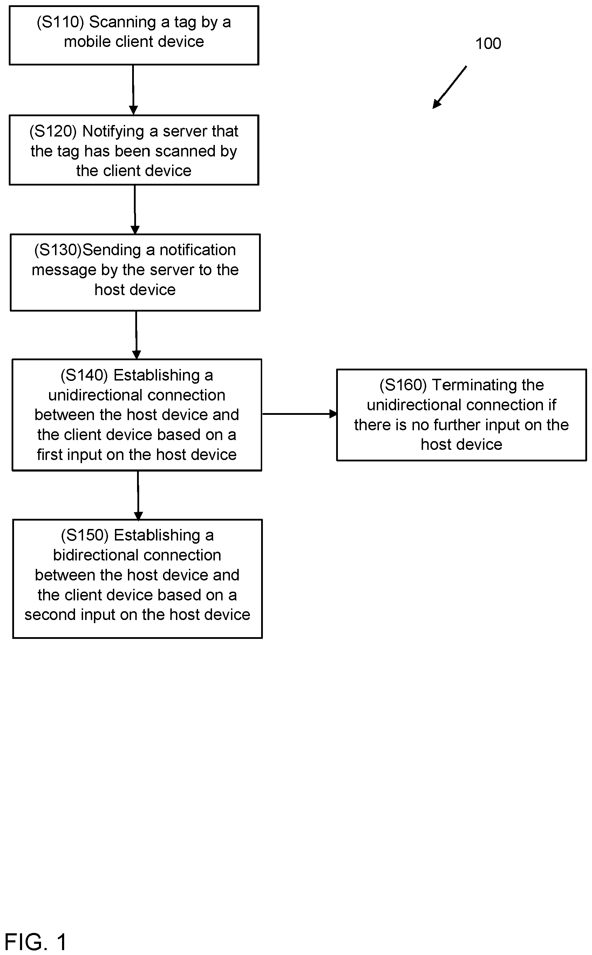

- Fig. 1: shows a diagram on the peer-to-peer communication according to an embodiment of the invention.

### Embodiments

The invention is described in detail for the following embodiments with respect to the accompanying drawing.

Fig. 1 shows a diagram on the peer-to-peer communication method according to an embodiment of the invention.

The method 100 comprises the steps of:
S110: Scanning a tag by a mobile client device.
S120: Notifying a server that the tag has been scanned by the client device, wherein an association of the tag with a mobile host device is pre-stored on the server.
S130: Sending a notification message by the server to the host device, the notification message informing the host device that the client device is requesting to establish a connection by having scanned the tag.
S140: Triggered by a first input on the host device in response to having received the notification message, establishing a unidirectional connection between the host device and the client device, allowing the host device to receive data from the client device.
S150: Accepting, by a second input on the host device, the request of the client device to establish the connection and establishing a bidirectional connection allowing mutual exchange of data between the host device and the client device. The steps of accepting the request of the client device and establishing a bidirectional connection are performed after the step S140 of establishing a unidirectional connection.
S160: The unidirectional connection is terminated if there is no further input on the host device within a predefined period of time.

Summarized, embodiments of the invention can be described as follows.

The solution provides a peer-to-peer communication between two devices wherein the communication can be text, voice, video or the transmission of data or files like pictures, voice messages or other. The specific feature of the invention is the process of establishing a communication link by respecting anonymity on both sides and allowing to successively granting communication access revealing privacy in an iterative way.

At the core is a database ("server") which links communication devices like smartphones, computers or others to a machine readable tag like a QR-code, barcode, an RF-ID or NFC Tag or other machine readable tags ("tag" or "gate"). By reading the tag or scanning the QR-code (e.g. with a smartphone), the system initiates the establishing of a communication between the scanning device and the device, linked with the tag.

The operator, using the scanning device ("client") is aware that by scanning the tag, his device will allow the system to establish a communication link with the device linked with the tag ("host"). This link and any information about the host will by default be anonymous to the scanning device.

When scanning the tag or gate:
1. In a first step, the system will inform the host that a client is trying to establish a communication link. This can be done using push messages or other methods to make the client aware of the communication request like making the smartphone ring or acting like it has been set up to act when receiving a call. In this first phase, initial information can be already transmitted, depending on what the client allows to be transmitted (e.g. name or alias of client, location, video feed from the client device or other relevant information).
2. Once the operator of the host devices is aware of the communication request, he can decide to check for more information by activating the app or selecting functions on the app. This could include to start a one-way video link from the client device to the host device. This way, the operator of the host device can see who is in front of the client device without the operator of the client device recognizing that the host has activated the app or is monitoring the information provided by the client. Other initial information can be position of the client device, name of the operator or organization of the operator or other relevant information. To support this function, the operator of the client device can be informed to position his device in such manner, that the client device can capture a visual or life video link showing the operator and or the vicinity of the operator.
3. If the host does not initiate any further actions, the communication request will be timed out after some time and the client will be informed that the host is not available. The communication request can then be protocolled at the host and at the client device and/or in the server. However, if the host decides to establish a two-way communication, he can allow the system to establish a two-way communication, e.g. a audio/video link where both parties (host and client) can see and/or hear each other. Only then, the client becomes aware of the host being active. An alternative can be establishing a two-way text messaging or exchange of files and other data.

Other specific features of the invention:
1. A client (he might have to be registered with the app system) can set up tags with additional properties. Such properties could be:
   a. Location of the tag / gate. When scanned, the location or location like information associated with the specific tag will be transmitted to the host.
   b. Scanning could also yield to transmit the position information of the client device to the host device.
   c. Algorithm and AI could be used to verify the position of the client device by comparing the position information of the client device with other information received from the client device like the video feed.
   d. Algorithm and AI can be used to use face recognition and match this with other user information to verify the client operator's identity, mood or intention.
   e. Time limited tag validity: The tag will only yield to a successful connection within a selected time span. This time span could consist of any or a combination of start date/time, end date/time, number of connection requests.
   f. Single use/limited use tag. The tag becomes void after one or a predetermined number of successful connections or when another event has marked the tag as "used". This can be useful for logistical applications like delivery services.
   g. Special-use-tags: Such tags might allow the client device to send information to the host device without the host having to actively allow the establishing of a two-way communication. Such information could be text, files, pictures, video feeds, position information of the client device or other relevant information.
   h. Peer-2-peer sessions: when scanning a tag, a connection will be established between one client device and one host device.
   i. Multi-peer-2-peer: More than one client device can request a communication link at the same time.
   j. Multi-peer-2-multi-peer: More than one client device can request a communication link at the same time. The links will then be distributed among multiple available host devices.
   k. Auto-connect: scanning a tag could yield to an auto connect to the client device allowing to send messages, pictures or video feeds to the client device.

### Potential applications:

1. "Peep-hole" app: The peer-to-peer functionality with the connection process as described above can be used to substitute a "peep-hole" and functioning as a video door bell without having to install a video camera at the door or at the position of the tag. Various features as described above can help to ensure and verify the position of the client device and the identity of the client device operator. An invention specific characteristic is the sequence of establishing the communication link as described above, where the host can already see the client without the client being aware of the host (peep-hole).
2. Delivery tag: Logistical services like online-stores or other delivery services can generate a "limited use" tag as described above and place this onto the goods or accompanying documents to be delivered. Once the delivering services has reached the delivery address, he can scan the tag and:
   a. Establish a communication with the addressee of the delivery goods for managing the final delivery.
   b. Place the goods and send a message consisting of text, picture of placement, position information which (could be verified as described above) or other relevant information by scanning the tag.
3. Anonymous call soliciting: By placing a tag anywhere, the host operator invites anybody to call. No personal information has to be revealed on either side and a call can be established as described above.
4. Door opener: The "peep-hole" functionality can be extended to provide a remote controlled door opening functionality. After scanning the tag placed close to or on the door to be opened, the host operator can be reached as described above and manually trigger a door opener. The functionality can be enhanced using an algorithm and/or AI to verify the location and identity of the client operator. This can be enhanced even further by sending a unique electronic key to the client device. This could be used for apartments and hotel rooms with electronic check-in where the client receives such a key with the reservation. The functionality might be used for other applications requiring the identification of the client prior to providing a service or product.
5. Virtual concierge: Instead of having a permanent reception, this method can be used to provide a reception or concierge service. The host operating the host device can check the operator of the client device (having scanned the tag outside of a building) and can decide to open the door. This is related to the "door opener" example under item 4 above.

A corresponding service can be also provided as an info desk or info center in companies, cities at touristic places, points of interest, where the client using the client device requests access to such an info desk or info center. A host using the host device may grant access in response, or access may automatically be granted after having checked a database of identification information identifying the client.
6. Anonymous counseling services: Counseling services (e.g.: psychological, mental health, marriage) can use this method to provide more anonymity for the client. In particular, the client may decide not to transmit visual information (camera deactivated) to the host device.
7. Dating websites: In dating applications this method can remove the possibility of a fake profile on usual dating websites. Instead, two individuals can decide to have a quick call anonymously, if they agree, after having read some basic information about each other on the website. They can then decide whether to exchange more information or not. Usually dating websites ask a lot of personal info already before being able to connect with other people, which can be avoided using the method of the present invention.

The embodiments are only exemplary and the full scope of the present invention is defined by the claims.

## Claims

1. A method for establishing a peer-to-peer connection, comprising:
scanning a tag by a mobile client device;
notifying a server that the tag has been scanned by the client device, wherein an association of the tag with a mobile host device is pre-stored on the server;
sending a notification message by the server to the host device, the notification message informing the host device that the client device is requesting to establish a connection by having scanned the tag; and
triggered by an input on the host device or automatically in response to having received the notification message, establishing a unidirectional connection between the host device and the client device, allowing the host device to receive data from the client device.

2. The method of claim 1, wherein the data are received by the host device without notification of the client device.

3. The method of claim 1 or 2, wherein, by scanning the tag, an operator of the client device agrees to one or more types of data being send to the host device.

4. The method of any one of claims 1 to 3, further comprising:
accepting, by another input on the host device or automatically, the request of the client device to establish the connection; and
establishing a bidirectional connection allowing mutual exchange of data between the host device and the client device.

5. The method of claim 4, wherein the steps of accepting the request of the client device and establishing a bidirectional connection are performed after the step of establishing a unidirectional connection.

6. The method of any one of claims 1 to 3, wherein without another input on the host device within a predefined period of time, the unidirectional connection is terminated, and optionally, the client device receives a message that the host device is not available.

7. The method of any one of claims 1 to 6, wherein the data comprise at least one of text data, image data, video data, or sound data; and/or wherein the data comprise at least one of position data of the client device or an identification of an operator of the client device.

8. The method of claim 7, wherein the data comprise real-time data generated by a camera and/or a microphone of the client device and, in combination with claim 4, real-time data generated by a camera and/or a microphone of the host device.

9. The method of any one of claims 1 to 8, wherein the data received from the client device comprise image or video data, and an algorithm or an artificial intelligence method is used to perform face recognition to verify the identity, mood or intention of the operator of the client device.

10. The method of any one of claims 1 to 9, wherein scanning of the tag allows a successful connection only within a preselected time span or for a limited number of connection requests and/or wherein the tag is void after the preselected time span or the limited number of connection requests and does no longer allow a connection.

11. The method of claim 10, wherein the tag is a delivery tag placed on a delivery item or on an accompanying document, and based on an input on the client device or automatically, sending delivery information to the host device, such as a message consisting of text, a picture of placement of the delivery item, and/or position information of the delivery item.

12. The method of any one of claims 1 to 11, wherein more than one client device requests a communication at the same time and respective communication links are distributed among multiple available host devices.

13. The method of any one of claims 1 to 12, wherein the operator of the host device can trigger a door opener, in particular by sending a unique electronic key to the client device.

14. The method of any one of claims 1 to 13, wherein the tag comprise a QR-code, a barcode, an RF-ID or an NFC tag.

15. A computer-readable medium comprising instructions which, when executed by a computer, cause the computer to carry out the method of any one of claims 1 to 14.
